# EUROPEAN PATENT APPLICATION

(11) **EP 1 489 144 A1**
(43) Date of publication of application: **22.12.2004**
(21) Application number: 03076907.9
(22) Date of filing: 18.06.2003
(51) Int. Cl.: C09B 69/10

(54) **Water-soluble polymeric dye**

(71) Applicant: DSM IP Assets B.V., 6411 TE Heerlen (NL)
(72) Inventor: Tijssen, Pascal Maria Hubert Pierre, 6191 XV Beek (NL)
(74) Representative: Dorrestijn, Antoon

(57) **Abstract**

The invention relates to a water-soluble polymeric dye comprising an anionic or nonionic chromophore unit covalently bound to a polymer backbone, wherein the polymer backbone is based on a water-soluble anionic or nonionic polymer and the polymer backbone comprises a) at least 2.5 anionic functional groups or at least 5 hydroxyl functional groups, or a combination thereof, per average chromophore unit for an anionic chromophore unit or b) at least 3.5 anionic functional groups or at least 7 hydroxyl functional groups, or a combination thereof, per average chromophore unit, for an nonionic chromophore unit. The polymeric dye according to the invention has good skin and fabric washability, and can be applied in paints and ink formulations for use markers and ink jet cartridges.

## Description

The invention relates to a water-soluble polymeric dye comprising an anionic or nonionic chromophore unit covalently bound to a polymer backbone, more particular to a polymeric dye that can be used in washable ink compositions.

Such a polymeric dye is known from US-5,043,013. In the known polymeric dye, the chromophore unit is covalently bound to 1 to 4 polymer backbones consisting of polyglycolether groups (i.e. polyalkyleneoxy groups), more particular polyethyleneoxide groups, the 1 to 4 polyglycolether groups comprising in total 6 to about 40 glycolether units. The chromophore unit may be substituted with 1 to 4 polar groups, more particular anionic groups, such as sulphonic acids and carboxylic acids and salts thereof. Ink compositions based on the known polymeric dye comprising a polar group-substituted chromophore unit are said to exhibit low tendency to staining on both skin and fabrics so that all, or virtually all of the colorant may be removed from skin by means of conventional soap and water washing and from clothing using conventional laundering techniques.

A disadvantage of the known polymeric dye comprising a polar group-substituted chromophore is that it exhibits a limitation in the combined skin and fabric washability. If the polymeric dye has good skin washability it has limited fabric washability. This is the case with the known polyalkyleneoxy-substituted, polar group-substituted chromophore containing polymeric dyes having a high ethyleneglycolether content. Vice versa, polyalkyleneoxy-substituted, polar group-substituted chromophore containing polymeric dyes having a low ethyleneglycolether content show a good fabric washability but have a limited skin washability.

Similar polymeric dyes comprising a nonionic chromophore unit, i.e. a chromophore unit, which does not contain an anionic group, are described in the comparative examples in US-5,043,013. A disadvantage of the known polymeric dye without polar groups on the chromophore unit is that unsatisfactory staining results are obtained regardless of the molecular weight or ethylene oxide unit range studied.

A good washability for a wide range of chromophores with various colours is important e.g. for ink formulations for markers and paints used by children. When a child makes a drawing or painting and spoils ink on his hands and cloths leaving intensity coloured stains, it is highly desirable that these stains can easily be washed away with low to none residual staining. This also applies to latex wall boards, furniture and carpeting.

The aim of the present invention is therefore to provide a water-soluble polymeric dye that allows a good washability with both anionic chromophore units and nonionic chromophore units.

This aim has been achieved with the water-soluble polymeric dye according to the invention wherein the polymer backbone is based on a water-soluble anionic or nonionic polymer and the polymer backbone comprises
a) at least 2.5 anionic functional groups or at least 5 hydroxyl functional groups, or a combination thereof, per average chromophore unit for an anionic chromophore unit or
b) at least 3.5 anionic functional groups or at least 7 hydroxyl functional groups, or a combination thereof, per average chromophore unit, for a nonionic chromophore unit.

With the polymeric dye according to the invention comprising a chromophore unit covalently bound to a polymeric backbone based on a water-soluble anionic or nonionic polymer and comprising least 2.5 anionic functional groups or at least 5 hydroxyl functional groups, or a combination thereof, per chromophore unit for an anionic chromophore unit, or at least 3.5 anionic functional groups or at least 7 hydroxyl functional groups, or a combination thereof, per chromophore unit, for an nonionic chromophore unit, the desired washability properties are obtained irrespective of whether the chromophore unit is an anionic or nonionic chromophore unit.

The effect of water-soluble polymeric dye comprising an anionic chromophore unit covalently bound to a polymeric backbone based on a water-soluble anionic or nonionic polymer and comprising least 2.5 anionic functional groups or at least 5 hydroxyl functional groups, or a combination thereof, per chromophore unit, is that improved skin and/or fabric washability is obtained, resulting in a better combination of washability properties than the corresponding known polymeric dye comprising an anionic chromophore unit.

The effect of the water-soluble polymeric dye comprising a non-ionic chromophore unit covalently bound to a polymeric backbone based on a water-soluble anionic or nonionic polymer and comprising least 3.5 anionic functional groups or at least 7 hydroxyl functional groups, or a combination thereof, per chromophore unit, is that still good skin and fabric washability properties are achieved.

The advantage of the water-soluble polymeric dye according to the invention is that any chromophore unit may be used, irrespective of whether the chromophore unit is an anionic or a non-ionic chromophore unit.

Water-soluble polymeric dyes comprising a chromophore unit covalently bound to a polymeric backbone, which polymeric backbone optionally comprises anionic functional groups, are known from US-4,381,185. These known polymeric dyes comprise a plurality of chromophore units, wherein the number of recurring units comprising a chromophore unit, is from 10 to 10.000. The polymeric dyes according to US-4,381,185 contain anionic groups, wherein the number of anionic groups is from 10 to 2000 per average polymeric dye molecule. The anionic groups are generally bound to the chromophore unit. The polymeric backbones to which the chromophore units are attached are organic polymers. Included among the backbones are cation *(in casu* amine) group-bearing backbones and polymers comprising anionic (*in casu* sulphonic) copolymeric units. In one example a polymeric dye is described comprising a plurality of nonionic chromophore units bound to a polymeric backbone comprising 2 anionic groups per chromophore unit. The polymeric dyes according to US-4,381,185 are used for water-fast printing of paper by printing on paper comprising polyvalent metal cation.

US-4,381,185 does not relate to skin and fabric washability. US-4,381,185 does neither describe a water-soluble polymeric dye comprising the measures according to the invention, nor the effects of these measures as according to the invention.

Water-soluble polymeric dyes comprising a chromophore unit covalently bound to a polymeric backbone comprising anionic functional groups are known from US-4,414,252. In these polymeric dyes the backbone comprises from 0.2 to 4 anionic functional groups per chromophore unit. In the water-soluble polymeric dye according to US-4,414,252 the chromophore unit is a cationic chromophore comprising an amine functional group. These polymeric dyes are used for edibles.

US-4,414,252 does not relate to the problem of skin and fabric washability. US-4,414,252 does neither describe a water-soluble polymeric dye according to the present invention, comprising an anionic or nonionic chromophore bound to a polymer backbone based on an anionic or nonionic polymer, nor the effects of these measures as according to the invention.

US-4,096,134 discloses water-soluble polymeric dyes comprising a chromophore unit covalently bound to a polymeric backbone based on a copolymer of vinylsulphonate and an olefinically unsaturated alkylamine, or an olefinically unsaturated alkylamine precursor. The polymeric backbone comprises both anionic functional groups and cationic functional groups. In these polymeric dyes the polymeric backbone comprises from 0.7 anionic functional groups and 1.4 cationic groups per average chromophore unit up to 8.3 anionic functional groups and 3.3 cationic functional groups per average chromophore unit. The polymeric dyes according to US-4,096,134 are used as colorants for edibles. Also non-edible applications, like water-based paints, water-soluble inks and dyes and applied to fibers, fabrics and paper are mentioned, in which applications the polymeric dyes according US-4,096,134 may be used alone or admixed with other colorants in amounts of from about 20 ppm to 10% by weight.

US-4,096,134 does not relate to the problem of skin and fabric washability as according to the invention. US-4,096,134 does not describe a water-soluble polymeric dye according to the present invention, comprising an anionic or nonionic chromophore bound to a polymeric backbone based on an anionic or nonionic polymer. US-4,096,134 does neither describe the measures according to the invention, nor the effects of these measures.

The term "dye" is understood to be a soluble colorant comprising at least one chromophore unit.

A "chromophore unit" is understood herein to be an organic chemical group exhibiting a visual color to the human eye under exposure of visible light or ultraviolet light.

The term "chromophore" is understood herein to be a low molecular organic compound comprising a chromophore unit. Such compounds are generally referred to as organic pigments or dyes, such as organic pigments described, for example, in Industrielle Organische Pigmente (W. Herbst, K. Hunger, Society of Dyers and Coulorists, VCH-Verlag, Weinheim 1995) and dyes listed, for example, in Sigma-Aldrich Handbook of Stains, Dyes and Indicators.

The term "polymeric dye" is understood herein after to be a dye comprising at least one chromophore unit bound to a polymer backbone.

The term "water-soluble" shall mean the property of being soluble in water to an extent of at least 500 ppm by weight.

The expression "based on a water-soluble polymer" is understood to be either derived from a water-soluble polymer, and/or to comprise the structural units of a water-soluble polymer or to be derived from the structural elements of a water-soluble polymer. With "structural elements" are meant the monomeric units or reactants from which a water-soluble polymer may be prepared.

The term "anionic" is used to represent both an acid functional group, or groups, and salts thereof (e.g. in anionic functional groups) or to indicate the presence of substituents bearing an acid functional group, or groups, or salts thereof (e.g. in anionic polymer and anionic chromophore unit). The term "anionic chromophore unit" is understood herein to also include a chromophore unit comprising a salt of an acid functional group, consisting of an anion and a cation as counter-ion, and having the form of a Zwitter ion, i.e. a chromophore unit wherein both the anion and the cation are present as a substituent on the chromophore unit.

An "anionic polymer" is understood to be a polymer comprising anionic functional groups. The anionic polymer may optionally comprise hydroxyl functional groups. Such a polymer does not comprise, or comprises essentially no cationic functional groups. If any cationic groups are present, these must be present in an amount sufficiently low to achieve the effect of the invention. Typically, the amount of cationic functional groups in such a polymer is less than 5 mole %, relative to the amount of anionic groups.

A "non-ionic polymer" is understood to be a polymer comprising no, or essentially no ionic groups. If any cationic groups are present, these must be present in an amount sufficiently low to achieve the effect of the invention. Typically, the amount of cationic functional groups in such a polymer is less than 2.5 mole %, relative to the amount of hydroxyl functional groups.

The expression "a combination thereof" in respect of the anionic and hydroxyl functional groups per chromophore unit is to be interpreted as follows: where the backbone comprises at least 2.5 anionic functional groups or at least 5 hydroxyl functional groups per average chromophore unit, the combination of functional groups comprises at least 2.5-Y (in words: 2.5 minus Y) anionic functional groups and at least 2Y hydroxyl functional groups per chromophore unit, wherein Y can be any natural number between 0 and 2.5. Analogously, where the backbone comprises at least X instead of 2.5 anionic functional groups or at least 2X in stead of 6 hydroxyl functional groups per average chromophore unit, wherein X is a natural number larger than 2.5, the combination of functional groups comprises at least X-Y anionic functional groups and at least 2Y hydroxyl functional groups per chromophore unit, wherein Y can be any natural number between 0 and X.

For the sake of clarity it is explained that in the context of the present invention the number of functional groups per average chromophore and comprised by the polymeric backbone is understood to be the number of functional group that is retained or formed while preparing the polymeric dye according to the invention. As an example to illustrate this explanation: if the polymeric dye is formed out of a water-soluble polymer having 18 hydroxyl functional groups per polymeric chain, 2 of which are used to each bound 1 chromophore molecule, while the other functional groups remain unaltered, the number of functional groups comprised by the polymeric backbone is 16, corresponding with 8 hydroxyl functional groups per average chromophore. A second example relates to an anhydride containing copolymer, containing 9 anhydride groups. If 3 anhydrides are reacted with a chromophore bearing a reactive amine group, wherein each reacted anhydride forms an amide group and an carboxylic acid group, and the remaining anhydride groups are hydrolyzed, each remaining anhydride group thereby forming two carboxylic acid groups, the number of anionic functional groups, i.e. carboxylic acid groups, comprised by the polymeric backbone in the polymeric dye is 15, thus resulting in 5 anionic functional groups per average chromophore.

In the polymeric dye according to the invention, the polymer backbone preferably comprises at least 3.5 anionic functional groups or at least 7 hydroxyl functional groups, or a combination thereof, per average chromophore unit for an anionic chromophore unit. The advantage of a higher number of functional groups comprised by the polymeric backbone per average chromophore unit is that the polymeric dye has better washability properties on both skin and fabric.

More preferable, the polymer backbone comprises at least 4 anionic functional groups or at least 8 hydroxyl functional groups, or a combination thereof, per average chromophore unit. Even more preferable, the polymer backbone comprises at least 5 anionic functional groups or at least 10 hydroxyl functional groups, or a combination thereof, per average chromophore unit, still more preferable at least 6 anionic functional groups or at least 12 hydroxyl functional groups, or a combination thereof, per average chromophore unit. The advantage of a higher minimum number of functional groups comprised by the polymeric backbone per average chromophore unit is that the polymeric dye has better washability properties on both skin and fabric, also in the case the chromophore unit is a nonionic chromophore unit.

In the polymeric dye according to the invention, the chromophore unit can be anionic or nonionic. Preferably the chromophore unit is anionic, i.e. comprising at least 1 anionic group. More preferably, the chromophore unit comprises at least 2 anionic groups, even more preferably at least 3 anionic groups. The advantage of polymeric dye according to the invention, wherein the chromophore unit comprises at least 1 anionic group, is that the polymeric dye has a better water-solubility, which property is further enhanced when the number of the anionic groups is even higher.

The acid functional group, which may be used as the anionic functional group, or groups, comprised respectively by the polymeric backbone and/or by the anionic chromophore unit in the polymeric dye according to the invention, can be any type of acid functional group. Suitable acid functional groups are, for example, carboxylic acid, sulphonic acid, sulphoric acid, phosphoric acid, phosphonic acid, phosphinic acid, and mixtures thereof.

Preferably, the acid functional group comprised by the polymeric backbone in the polymeric dye according to the invention is a sulphonic acid, sulphoric acid, phosphoric acid, phosphonic acid, phosphinic acid, more preferably sulphonic acid. The advantage is that these acid functional groups impart water-solubility over a larger pH range, thereby showing a reduced tendency to precipitation when formulating a composition comprising the polymeric dye.

Also preferably the anionic functional group comprised by the polymeric backbone in the polymeric dye according to the invention is a salt of an acid functional group, more preferably the salt of a carboxylic acid or a sulphonic acid. The advantage of the polymeric dye wherein anionic functional group comprised by the polymeric backbone is a salt of an acid functional group, is that the polymeric dye has better washability properties.

Suitable salts are, for example, ammonium salts, alkylammonium salts, arylammonium salts, quarternary ammonium salts, and alkali metals salts, such as lithium salts, sodium salts, and potassium salts. Preferably the salt is a sodium, ammonium, or potassium salt.

The polymeric dye according to the invention may be prepared by different processes in dependence of the type of chromophore and polymeric backbone.

Suitable processes for preparing the polymeric dye according to the invention are, for example, processes comprising modification of an anionic or nonionic water-soluble polymer with one or more chromophore units; modification of an anionic or nonionic water-soluble polymer with one or more chromophore precursors followed by converting the chromophore precursor or precursors into chromophore units; and modification of a monomer with a chromophore or a chromophore precursor, followed by converting the modified monomer together with suitable monomers bearing anionic or hydroxyl functional groups, and optionally further comonomers, into a polymer. A further suitable process as the process comprising modification of a polymer comprising latent hydroxyl and/or anionic functional groups with a chromophore unit (or prechromophore unit) followed by converting the latent hydroxyl and/or anionic functional groups into hydroxyl and/or anionic functional groups.

The polymer on which the polymeric dye according to the invention can be based may be any polymer suitable for purpose of the invention. Typically the polymers are organic polymers comprising hydrocarbon groups as well as anionic and/or hydroxyl functional groups. The hydrocarbon groups may contain aromatic moieties. The polymers may further contain hydrophilic and/or polar groups, such as ether groups, ester groups and amide groups. The polymers may be homopolymers or copolymers. The polymers may be polymers derivable by any type of process, such as condensation polymers and polymers obtainable by radical polymerization, anionic polymerization, cationic polymerization, and ring opening polymerization. The polymers may be linear or branched, being slightly branched or more, as well as highly branched such as in hyperbranched polymers and dendrimers.

The polymer forming the polymeric backbone in the polymeric dye according to the invention may have a weight average molecular weight (Mw) which may be varied over a wide range. The Mw may be as low or even lower than 1000, and as high or even higher than 100.000.

Preferably the Mw is between 1000 and 50.000, more preferably between 1000 and 10.000, and even more preferably between 1000 and 3.000. The advantage of a polymer forming the polymeric backbone in the polymeric dye according to the invention having a lower Mw is that lower viscous solutions and solutions with lower viscosities can be prepared.

Suitable polymers that can be used as a basis for the polymeric dye according to the invention are, for example, polyacrylates, polymers and copolymers of vinyl monomers (further herein referred to as vinyl polymers), polyethers, polyesters, polyamides and the like, provided the polymers bear sufficient anionic and/or hydroxyl functional groups to make the polymer water-soluble. Suitable polymers also include polyacrylates, vinyl polymers, polyethers, polyesters, polyamides and the like, bearing latent anionic and/or hydroxyl functional groups, which latent groups are capable of being converted into anionic and/or hydroxyl functional groups in an amount sufficient to make the polymer, obtained after said conversion, water-soluble. An example of suitable latent hydroxyl functional group is an epoxy group. A suitable latent anionic functional group is, for example, a cyclic anhydride group. The polymers may suitably be combinations of different type of polymers, such as polyacrylates bearing amide groups, polyetheresters and polyesteramides.

Suitable polyacrylates are, for example, carboxy functional polyacrylates, such as polyacrylic acid, copolymers of (meth)acrylic acid and other acrylate monomers, and hydroxy functional polyacrylates, such as poly-HEMA (HEMA = hydroxyethylmethacrylate) and copolymers of HEMA with other acrylate monomers.

Suitable vinyl polymers are, for example, polyvinylalcohol (PVA), copolymers of ethylenically unsaturated monomers, such as olefins (like ethylene, propylene, isobutene, 1-octene) and vinyl aromatic monomers (such as styrene and methylstyrene), with acid functional monomers, such a acrylic acid, fumaric acid, itaconic acid, vinyl sulphonic acid and HEPA (HEPA = hydroxyethylmethacrylate phosphoric acid ester), and copolymers of ethylenically unsaturated monomers, such as olefins (like ethylene, propylene, isobutene, 1-octene) and anhydride functional monomers (such as maleic anhydride, and itaconic anhydride), which anhydride functional groups can be converted into acid groups, or into acid and amide groups, or into acid and ester groups, to give a water-soluble polymer. A suitable copolymer of ethylenically unsaturated monomers and anhydride functional monomers is, for example, styrene-maleic anhydride copolymer (SMA)

Suitable polyesters are, for example hyperbranched polyesters comprising anionic and/or hydroxyl functional groups in an amount sufficient to comply with the requirements of the polymeric dye according to the invention. Suitable polyesters are, for example, hyperbranched polyesters based on trimethylpropane 2,2-bis(methylol)propionicacid and tri(methylol)propane or pentaerythrytol.

Suitable polyesteramides are, for example hyperbranched polyesteramides comprising anionic and/or hydroxyl functional groups in an amount sufficient to comply with the requirements of the polymeric dye according to the invention. A hyperbranched polyesteramide is understood to be a polyesteramide prepared from a dicarboxylic acid or a cyclic anhydride thereof with an alkanolamine, preferably dialkanolamine, optionally in combination with mono and/or trialkanolamine, mono-functional carboxylic acid, mono-functional alcohol and/or mono-functional amine. Suitable hyperbranched polyesteramides may be based for example on succinic anhydride and di(isopropanol)amine and combinations thereof with, for example, phthalic anhydride, tetrahydrophthalic anhydride, and/or hexahydrophthalic anhydride.

Preferably, the water-soluble polymer is chosen from the group consisting of carboxy functional polyacrylates, polyvinylalcohol, SMA, and hyperbranched polyesteramide. The advantages of these polymers is that they are readily availability and/or can be easily be prepared, can be prepared with and/or are available with a large multitude of anionic and/or hydroxy functional groups, have a good water solubility, and can easily be modified with chromophore units.

More preferably, the water-soluble polymer is a hyperbranched polyesteramide. The advantage is that a solution comprising a polymeric dye according to the invention based on a hyperbranched polyesteramide have a much lower viscosity than a solution comprising a polymeric dye based on a linear polymer. Further advantages are that solutions can be prepared with a much higher polymeric dye content than a solution comprising a polymeric dye based on a linear polymer and having the same viscosity, and that the polymeric dye may be based on a polymer having a much higher weight average molecular weight (Mw) while retaining the same viscosity, compared to a solution comprising a polymeric dye based on a linear polymer.

Preferably, the hyperbranched polyesteramide is a hyperbranched polyesteramide based on succinic anhydride and di(isopropanol)amine having a Mw between between 1000 and 5000, more preferably between 1000 and 3000, still more preferably between 1000 and 2000. The advantage of a hyperbranched polyesteramide based on succinic anhydride and di(isopropanol)amine with of a lower Mw is that the resulting polymeric dye has better solubility and washability properties and has a lower solution viscosity.

Also more preferably, the water-soluble polymer is SMA, having the advantage that the polymer can generally be modified with chromophore units under less severe conditions than acrylate and hydroxyl functional polymer.

Preferably, the SMA used for the preparation of the polymeric dye according to the invention has a Mw between 1000 and 10000, more preferably, between 1000 and 5000, still more preferably between 1000 and 3000. The advantage of an SMA with of a lower Mw is that the resulting polymeric dye has better solubility and washability properties and has a lower solution viscosity.

Also preferably, the SMA used for the preparation of the polymeric dye according to the invention has a maleic anhydride / styrene molar ratio from 25/75 up to and including 50/50, more preferably from 35/65 up to and including 50/50, still more preferably from 40/60 up to and including 50/50. The advantage of an SMA with higher maleic anhydride / styrene molar ratio is that the resulting polymeric dye has better solubility and washability properties.

Chromophores, which can be used for preparing the polymeric dye according to the invention can be selected from a wide range of classes of chromophores, provided these chromophores are anionic or nonionic and provided that the chromophores are capable of being covalently bound as a chromophore unit to a water soluble polymer. This requirement may be complied with by a chromophore comprising a reactive group capable of reacting with an active site on an anionic or nonionic water-soluble polymer thereby forming a covalent bond, or by reacting said reactive group with a monomer bearing an analogous active site, thereby forming a modified monomer with a covalently bound chromophore unit, followed by polymerization of the modified monomer with suitable other monomers. Alternatively the requirement may be complied with by using chromophore precursor comprising a reactive group capable of for modifying the polymer or monomer by reaction with the said active group, thereby forming a polymer of monomer comprising a covalently bound chromophore precursor, followed by conversion of the covalently bound chromophore precursor into a covalently bound chromophore unit. The monomer comprising the covalently bound chromophore precursor, where suitable, may also be polymerized with suitable other monomers, prior to said conversion of the covalently bound chromophore precursor into a covalently bound chromophore unit.

Examples of suitable reactive groups for forming covalent bonds are halotriazine rings, for example fluorotriazine rings or chlorotriazine rings, dihalo- or halosulfonyl-pyrimidine rings, dihaloquinoxaline groups, dihalopyrazone groups, dihalophthalazine groups, halobenzothiazole groups, mono-(m-carboxypyridinium)-triazine groups, amino epoxide groups, substituted sulfone groups, for example a vinylsulfone group or sulfatoethyl sulfone group, carboxylic acid groups or carboxylic acid chlorides, phenolic groups, haloacetylamide groups and sulfatopropionamides, amines and hydroxyl groups.

Preferably the reactive group is a fluorotriazine ring or chlorotriazine ring, a vinylsulfone group, a carboxylic acid group or carboxylic acid chloride, or a phenolic group. The advantage is that these groups easily react with a hydroxy group or a carboxylic acid group to give a covalent bond . A fluorotriazine ring or chlorotriazine ring can react, for example, with a hydroxy group to form an ether bond between the colorant and the branched polyesteramide. A vinylsulfone group can react with, for example, a hydroxy group to form an ether bond. A carboxylic acid group or carboxylic acid chloride can react with, for example, a hydroxy group to form an ester bond.

Also preferably, the reactive group is an amine group or a hydroxyl group. The advantage is that these groups can easily react with an acid chloride or an anhydride to form an amide group or an ester group, respectively an amide group next to an acid group or an ester group next to an acid group.

A covalent bond between a chromophore unit and a polymeric backbone may also be formed by reacting a chromophore (or a precursor thereof) bearing an aliphatic hydroxyl group or an amine group with a carboxylic acid or anhydride functional polymer or monomer, or by reaction of an chromophore (or a precursor thereof) bearing an amine or carboxylic acid group with a epoxy functional monomeric unit.

Suitable chromophores that can be used in the polymeric dye according to the invention can be found, for example, in Industrielle Organische Pigmente (W. Herbst, K. Hunger, Society of Dyers and Coulorists, VCH-Verlag, Weinheim 1995) and in Sigma-Aldrich Handbook of Stains, Dyes and Indicators.

Suitable chromophores include, for example, azo chromophores (like mono-azo, bis-azo and tris-azo chromophores), anthraquinone chromophores, anthrapyrodine chromophores, nitroaniline chromophores, zanthene chromophores, copper phthalocyanine chromophores, naphthylamide chromophores, and the like.

Preferably the chromophore is chromophore chosen from the group consiting of azo chromophores, anthraquinone chromophores, diarylmethane, triarylmethane, xanthanes, acridines, methines, thiazoles, indamines, azines, and ozazine. Among these chromophores special preference is given to azo chromophores and anthraquinone chromophores.

Preferably, the chromophore comprises an anionic group. Examples of suitable anionic groups are, for example, carboxylic acid, sulphonic acid, phosphoric acid, phosphinic acid, or salts thereof. More preferably the anionic group is a sulphonic acid group or a carboxylic acid group or salt thereof.

The invention also relates to a process for preparing a polymeric dye according to the invention.

The process for preparing a polymeric dye according to the invention comprises
a) modification of an anionic or nonionic water-soluble polymer with one or more chromophore units; or
b) modification of an anionic or nonionic water-soluble polymer with one or more chromophore precursors followed by converting the chromophore precursor or precursors into chromophore units; or
c) modification of a monomer with a chromophore or a chromophore precursor, followed by converting the monomer together with suitable monomers bearing anionic or hydroxyl functional groups, and optionally further comonomers, into a polymer, or
d) modification of a polymer comprising latent hydroxyl and/or anionic functional groups with a chromophore unit (or prechromophore unit) followed by converting the latent hydroxyl and/or anionic functional groups into hydroxyl and/or anionic functional groups.

A suitable process for preparing a polymeric dye according to the invention comprising modification of an anionic or nonionic water-soluble polymer with one or more chromophore units (modification a) is, for example, the process wherein an water soluble carboxylic acid functional polymer, such as polyacrylic acid, or a water-soluble acrylic acid copolymer, or a water-soluble acid hyperbranched polyesteramide, is modified with one or more chromophore units by reacting said polyacrylic acid with an aliphatic hydroxyl functional chromophore, an amine functional chromophore or an epoxy functional chromophore, thereby forming an ester linkage, respectively an amine linkage or an ester linkage by which the chromophore unit is covalently bonded to the polymeric backbone.

Another example of modification a) is the process wherein a water-soluble hydroxyl functional polymer, such as a polyvinyl alcohol (PVA), a polyhydroxyethylacrylate (poly-HEMA), a water-soluble vinyl alcohol copolymer, a water-soluble hydroxyethylacrylate copolymer, or a water soluble hydroxyl functional hyperbranched polyesteramide, is modified with one or more chromophore units by reacting one of said copolymers a carboxyl functional chromophore, an acid chloride functional chromophore or a chlorotriazine chromophore, thereby forming an ester linkage, respectively an ester linkage or an ether linkage by which the chromophore unit is covalently bonded to the polymeric backbone.

The same reactions can be for the processes wherein the water-soluble polymer is reacted with a chromophore precursor, instead of a chromophore, followed by conversion of the chromophore precursor into a chromophore unit (modification b).

An example of such a process is the process wherein a water-soluble hydroxy functional polymer, such as PVA or poly-HEMA, is reacted with a carboxylic acid functional chromophore precursor comprising an activated aromatic ring, such as in N-phenyl-N-methyl-β-alanine as the chromophore precursor, to form a hydroxyl functional polymer comprising covalently bound chromophore precursor, such as an esterified N-phenyl-N-methyl-β-alanine group, followed by diazotation of the activated aromatic ring with a diazonium salt of an aromatic amine, such as para-aminobenzenesulphonic acid.

Another example of such a process is the process wherein a water-soluble carboxy functional polymer, such as carboxy functional polyacrylates, for example, polyacrylic acid, is reacted with a hydroxy functional chromophore precursor comprising an activated aromatic ring, such as in N-phenyl-N-methyl-β-hydroxyethylamine as the chromophore precursor, to form a carboxy functional polymer comprising covalently bound chromophore precursor, such as an esterified N-phenyl-N-methyl-β-hydroxyethylamine group, followed by diazotation of the activated aromatic ring with diazonium salt of an aromatic amine.

A suitable process for preparing a polymeric dye according to the invention comprising modification of a monomer with a chromophore or a chromophore precursor, followed by converting the monomer together with suitable monomers bearing anionic or hydroxyl functional groups, and optionally further comonomers, into a polymer (modification c), is, for example, the process or wherein a carboxylic acid functional monomer (such as acrylic acid) is reacted with an aliphatic hydroxyl functional or an epoxy functional chromophore (or chromophore precursor), thereby forming an ester linkage by which the chromophore unit (or chromophore precursor) is covalently bonded to the monomer. For example, as the chromophore precursor, N-phenyl-N-methyl-β-alanine can be used.

Another example of the process comprising modification c) is the reaction of a cyclic anhydride monomer (such as phthalic anhydride, or succinic anhydride) with an aliphatic hydroxyl functional or an amine functional chromophore (or chromophore precursor), thereby forming carboxylic group and an ester linkage, respectively an amide linkage, by which the chromophore unit (or chromophore precursor) is covalently bonded to a monomeric unit. Said monomeric unit can, for example be used, in combination with further cyclic anhydride monomer and hydroxylalkylamines to form a hydroxy functional hyperbranched polyesteramide comprising a covalently bonded chromophore (or chromophore precursor).

A suitable process comprising modification of a polymer comprising latent hydroxyl and/or anionic functional groups with a chromophore unit (or prechromophore unit) followed by converting the latent hydroxyl and/or anionic functional groups into hydroxyl and/or anionic functional groups (modification d) is, for example, the process wherein anhydride functional polymer (such as SMA), with sufficient anhydride functional groups to be converted into a water-soluble polymer, is reacted with an aliphatic hydroxy or amine functional chromophore (or chromophore precursor) to form a polymer comprising, next to unreacted anhydride functional groups, acid functional groups and ester group(or groups), respectively amine group (or groups), by which the chromophore unit (or prechromophore unit) (or units) is (or are) covalently bound to the polymeric backbone, followed by hydrolysis of the unreacted anhydride functional groups to form acid groups or neutralized acid groups.

An example of such process is the reaction of SMA with N-phenyl-N-methyl-β-hydroxyethylamine as the chromophore precursor, to form a polymer comprising esterified N-phenyl-N-methyl-β-hydroxyethylamine group, followed by diazotation of the activated aromatic ring in the esterified N-phenyl-N-methyl-β-hydroxyethylamine group with diazonium salt of an aromatic amine.

Preferably, the process according to the invention is a process comprising modification of a polymer comprising latent hydroxyl and/or anionic functional groups with a chromophore unit followed by converting the latent hydroxyl and/or anionic functional groups into hydroxyl and/or anionic functional groups, wherein the polymer comprising latent hydroxyl and/or anionic functional groups is SMA. The advantage of this process is that preparation of the polymeric dye according to the invention can be carried out at more moderate conditions and that process can be used for in combination of a very large range of chromophores and chromophore precursors.

In another preferred embodiment of the process according to the invention, the process comprises modification of a water-soluble polymer, a latent water-soluble polymer or a monomer with a chromophore precursor capable of participating in a diazotion reaction.

The invention also relates to the use of the polymeric dye according to the invention for the preparation of ink and paint compositions. The advantage of these compositions is when they are used, for example by children, for painting or drawing, that after spoilage of the ink or paint resulting in stains on hands and cloths, the stains can very easily be removed without leaving a significant stain if any.

The invention also relates to ink and paint compositions comprising a polymeric dye according to the invention and a diluent. Dyes are generally applied on a substrate as a composition of the dye in a diluent. An advantage of compositions comprising a polymeric dye according to the invention in a diluent is that the combined hand and skin washability properties are better than that of compositions with known dyes based on for example polyethylene oxide bonded dyes, as described in the patents cited above.

Suitable diluents are, for example, polar solvents like water, alcohols, glycols and ketones and mixtures thereof. Preferably, the diluent is water or a mixture of water with another polar solvent. More preferably, the diluent is water.

Preferably the dye has a solubility of at least 20 mg/ml, more preferably at least 50 mg/ml in water. The advantage of a higher concentration is that inks can be prepared with a higher color strength.

The invention also relates to the use of a ink composition according to the invention in markers and ink jet cartridges. The advantage of said use in ink jet cartridges is that it results in reduced clogging and extended usable life time of ink jet cartridges.

The invention also relates to the use of the ink compositions according to the invention for temporary coding of fiber yarns and textile. The advantage thereof is that the coding, when it has to be removed, can be better removed without leaving a significant stain if any.

The invention also relates to fiber yarns and textile bearing a temporary coding made by an ink composition according to the invention.

The invention is elucidated with reference to the following Examples and Comparative Experiments

### Materials

- SMA1000: 50/50 % (M/M) Styrene-Maleic anhydride copolymer weight average Mw 1800, average number of anhydride units per polymer chain of 9 (ex AtoFina);
- Dioxane: industrial grade (purity 99+%)
- Chromophores: Standard grades
- Reactants: Standard grades
- Palmer Colorants: Colorants for use in washable markers, comprising polymeric dyes based on polyethylene oxide (ex Milliken, USA)

### Example I: Preparation of Polymeric Dye No. I (Color Red)

10 g of SMA1000 was dissolved in 30 g of dioxane at 70°C, 1.73 g of Disperse Red 13 (C.I. 11115, 95%) and 0.1 gram of DMAP were added to this solution and the reaction mixture was allowed to react 48 hours at reflux temperature (± 100°C). To the resulting reaction mixture 7.2 g of a 50 % (M/M) solution of sodium hydroxide was added and the reaction was continued for an additional 30 minutes. At this point a precipitate could be observed in the dioxane after which 50 g of water were added to dissolve all the material. The dioxane was stripped under vacuum during which small amounts of water were supplied to compensate for loss of water during stripping. The resulting polymeric dye solution in water (concentration about 25% (M/M)) was neutralized with 2 N HCl solution to approximately pH=8. The polymeric dye has a calculated functionality of 17 carboxylate anions per average chromophore unit.

### Example II: Preparation of polymeric Dye No.II (Color Orange-1)

To a solution of 10 g of SMA1000 in 40 g of dioxane at 70°C, 0.2 g of DMAP and 1.3 g of Disperse Orange 3 (C.I. 11005, 90%) were added. This reaction mixture was allowed to react for 72 hours at reflux temperature after which it was cooled to 70°C. To the resulting solution 7.2 g of a 50 % (M/M) sodium hydroxide solution was added and the reaction mixture was cooled to 50°C. After 1.5 hours 50 g of water was added and the dioxane was stripped under vacuum during which small amounts of water were added to compensate for loss of water during stripping. The resulting polymeric dye solution in water (concentration about 25% (M/M)) was neutralized with 2 N HCl solution to approximately pH=8. The polymeric dye has a calculated functionality of 17 carboxylate anions per average chromophore unit.

### Example III: Preparation of Polymeric Dye No.III (Color Orange-1)

To a solution of 10 g of SMA1000 in 40 g of dioxane at 70°C, 0.2 g of DMAP and 2.6 g of Disperse Orange 3 (C.I. 11005, 90% (M/M)) were added. The reaction mixture was allowed to react 24 hours at reflux temperature. TLC analysis (stationary phase: silica gel; eluens: 50% (M/M) water/ethanol solution) showed a small amount of non-reacted chromophore and the reaction was carried on for another 24 hours. Subsequent TLC analysis showed no more free chromophore. A solution of 6.4 g of a 50 % (M/M) sodium hydroxide solution was added and the reaction mixture was cooled to 50°C. After 1 hour 50 g of water was added and the dioxane was stripped under vacuum during which small amounts of water were added to compensate for loss of water during stripping. The resulting polymeric dye solution in water (concentration about 25% (M/M)) was neutralized with 2 N HCl solution to approximately pH=8. The polymeric dye has a calculated functionality of 8 carboxylate anions per average chromophore unit.

### Example IV: Preparation of Polymeric Dye No. IV (Color Orange-1)

To a solution of 10 g of SMA1000 in 40 g of dioxane at 70°C, 0.2 g of DMAP and 4.0 g of Disperse Orange 3 (C.I. 11005, 90%) were added. The reaction mixture was allowed to react 24 hours at reflux temperature. TLC analysis (stationary phase: silica gel; eluens: 50% (M/M) water/ethanol solution) showed a small amount of non-reacted chromophore and the reaction was carried on for another 24 hours. Subsequent TLC analysis showed no more free chromophore. A solution of 5.6 g of a 50 % sodium hydroxide solution was added and the reaction mixture was cooled to 50°C. After 1 hour 50 g of water was added and the dioxane was stripped under vacuum during which small amounts of water were added to compensate for loss of water during stripping. The resulting polymeric dye solution in water (concentration about 25% (M/M)) was neutralized with 2 N HCl solution to approximately pH=8. The polymeric dye has a calculated functionality of 5 carboxylate anions per average chromophore unit.

### Example V: Preparation of Polymeric Dye No. V (Color Yellow)

To a solution of 10 g of SMA 1000 in 22 g of dioxane at 70°C, 0.3 g of DMAP and 5.4 g of Disperse Yellow 9 (C.I. 10375, 85%) were added. The reaction mixture was allowed to react 24 hours at reflux temperature. TLC analysis (stationary phase: silica gel; eluens: 50% (M/M) water/ethanol solution) showed no significant amounts of free chromophore and the reaction was cooled to 60°C. A solution of 5.6 g of a 50 % (M/M) sodium hydroxide solution was added and the reaction mixture was cooled to 50°C. After 1 hour 50 g of water was added and the dioxane was stripped under vacuum during which small amounts of water were added to compensate for loss of water during stripping. The resulting polymeric dye solution in water (concentration about 25% (M/M)) was neutralized with 2 N HCl solution to approximately pH=8. The polymeric dye has a calculated functionality of 5 carboxylate anions per average chromophore unit.

### Example VI: Preparation of Polymeric Dye No. VI (Color Orange-2)

### 6A. Preparation of diazonium salt.

24.24 g of 2-Aminothiazole (97%) was added to 110 g of 50 % (M/M) sulfuric acid and the mixture was cooled with an ice/salt bath to 0°C. To this solution a solution of 16.56 g of sodium nitrite in 50 g of water was added. The addition was slow enough in order to prevent the reaction temperature to rise above 2°C.

### 6B. Preparation of azo dye

In a separate beaker 22.32 g of aniline (98%) was mixed with 70 g of water. To this mixture was added an amount of concentrated hydrochloric acid such that the aniline was completely dissolved. This solution was cooled with an ice/salt bath to 0°C. To this aniline solution the diazonium salt solution prepared under 6A was added in such a manner that the temperature of the reaction mixture did not rise above 10°C. The orange color of the resulting azo dye appeared immediately after the first drops of diazonium salt were added. The reaction was allowed to stand for an additional 2 hours after which the reaction mixture was neutralized with 50 % (M/M) sodium hydroxide solution. The neutralization was done slowly while the reaction mixture was cooled with the ice/salt bath in order the keep the temperature below 20°C. At a pH of approximately 3 the azo dye precipitated and it was separated from the solution by filtration. The resulting solid product was thoroughly washed with cold water and dried in an oven. The yield was 34.14 g (69.4 mass %) of 4-(thiazoleazo)aniline.

### C. Preparation of water-soluble polymeric dye

To a solution of 10 g of SMA1000 in 22 g of dioxane at 70°C, 0.3 g of DMAP and 3.0 g of 4-(thiazoleazo)aniline were added. The reaction mixture was allowed to react 24 hours at reflux temperature. TLC analysis (stationary phase; silica gel, eluens; 50% (M/M) water/ethanol solution) showed no significant amounts of free 4-(thiazoleazo)aniline and the reaction was cooled to 60°C. A solution of 5.6 g of a 50 % sodium hydroxide solution was added and the reaction mixture was cooled to 50°C. After 1 hour 50 g of water was added and the dioxane was stripped under vacuum during which small amounts of water were added to compensate for loss of water during stripping. The resulting polymeric dye solution in water (concentration about 25% (M/M)) was neutralized with 2 N HCl solution to approximately pH=8. The polymeric dye has a calculated functionality of 5 carboxylate anions per average chromophore unit.

### Example VII: Preparation of Polymeric Dye No. VII (Color Orange-3)

### 7A. Preparation of diazonium salt

36.24 g of 2-Aminobenzothiazole (purity 97 mass %) was added to 110 g of 50 % (M/M) sulfuric acid and the mixture was cooled with an ice/salt bath to 0°C. To this solution a solution of 16.56 g of sodium nitrite in 50 g of water was added. The addition was slow enough in order to prevent the reaction temperature to rise above 2°C.

### 7B. Preparation of azo dye

In a separate beaker 22.32 g of aniline (purity 98 mass %) was mixed with 70 g of water. To this mixture was added an amount of concentrated hydrochloric acid such that the aniline was completely dissolved. This solution was cooled with an ice/salt bath to 0°C. To this aniline solution the diazonium salt solution prepared under 7A was added in such a manner that the temperature of the reaction mixture did not rise above 10°C. The red/orange color of the resulting azo dye appeared immediately after the first drops of diazonium salt were added. The reaction was allowed to stand for an additional 2 hours after which the reaction mixture was neutralized with 50 % (M/M) sodium hydroxide solution. The neutralization was done slowly while the reaction mixture was cooled with the ice/salt bath in order the keep the temperature below 20°C. At a pH of approximately 3 the formed azo dye precipitated and was separated from the solution by filtration. The resulting solid product was thoroughly washed with cold water and dried in an oven. The yield was 50.91 g (93.0%) of 4-(benzothiazoleazo)aniline.

### 7C. Preparation of water-soluble polymeric dye

To a solution of 10 g of SMA1000 in 22 g of dioxane at 70°C, 0.3 g of DMAP and 3.4 g of 4-(benzothiazoleazo) aniline were added. The reaction mixture was allowed to react 24 hours at reflux temperature. TLC analysis (stationary phase; silica gel, eluens; 50% (M/M) water/ethanol solution) showed no significant amounts of free 4-(benzothiazoleazo)aniline and the reaction was cooled to 60°C. A solution of 5.6 g of a 50 % (M/M) sodium hydroxide solution was added and the reaction mixture was cooled to 50°C. After 1 hour 50 g of water was added and the dioxane was stripped under vacuum during which small amounts of water were added to compensate for loss of water during stripping. The resulting polymeric dye solution in water (concentration about 25% (M/M)) was neutralized with 2 N HCl solution to approximately pH 8. The polymeric dye has a calculated functionality of 5 carboxylate anions per average chromophore unit.

### Example VIII: Preparation of Polymeric Dye No. VIII (Color Brown)

### 8A. Preparation of diazonium salt

42,00 g of 2-Amino-4-thiazoleacetic acid (95%) was added to 110 g of 50 % (M/M) sulfuric acid and the mixture was cooled with an ice/salt bath to 0°C. To this solution a solution of 16.56 g of sodium nitrite in 50 g of water was added. The addition was slow enough in order to prevent the reaction temperature to rise above 2°C.

### 8B. Preparation of azo dye

In a separate beaker 22.32 g of aniline (98%) was mixed with 70 g of water. To this mixture was added an amount of concentrated hydrochloric acid such that the aniline was completely dissolved. This solution was cooled with an ice/salt bath to 0°C. To this aniline solution the diazonium salt solution prepared under 8A was added in such a manner that the temperature of the reaction mixture did not rise above 10°C. The brownish color of the resulting azo dye appeared immediately after the first drops of diazonium salt were added. The reaction was allowed to stand for an additional 2 hours after which the reaction mixture was neutralized with 50 % (M/M) sodium hydroxide solution. The neutralization was done slowly while the reaction mixture was cooled with the ice/salt bath in order the keep the temperature below 20°C. At a pH of approximately 3 the azo dye precipitated and it was separated from the solution by filtration. The solid product was thoroughly washed with cold water and dried in an oven.
The yield was 37.25 g (57.0%) of 4-(4-thiazoleacetic acid azo) aniline.

### 8C. Preparation of water-soluble polymeric dye

To a solution of 10 g of SMA 1000 in 22 g of dioxane at 70°C, 0.3 g of DMAP and 4.0 g of 4-(4-thiazoleacetic acid azo) aniline were added. The reaction .mixture was allowed to react 24 hours at reflux temperature. TLC analysis (stationary phase; silica gel, eluens; 50% (M/M) water/ethanol solution) showed no significant amounts of free dye and the reaction was cooled to 60°C. A solution of 5,6 g of a 50 % (M/M) sodium hydroxide solution was added and the reaction mixture was cooled to 50°C. After 1 hour 50 g of water was added and the dioxane was stripped under vacuum during which small amounts of water were added to compensate for loss of water during stripping. The resulting polymeric dye solution in water (concentration about 25% (M/M)) was neutralized with 2 N HCl solution to approximately pH=8.

The polymeric dye comprises theoretically 5 carboxylate anions per average chromophore unit.

### Example IX. Synthesis of hyperbranched polyesteramide comprising an activated aromatic ring (HBPEA-1)

A 1-liter glass reactor equipped with a mechanical stirrer, a nitrogen inlet and a distillation column was charged with 432.3 g of di-isopropanol amine and heated to 80°C, after which 270.7 g of flaked succinic anhydride was added. The reaction temperature increased to 120°C due to exothermic reaction. After the exothermic reaction the mixture was heated to 180°C followed by addition of 97.0 g of N-phenyl-N-methyl-β-alanine at this temperature. The reaction was allowed to proceed for an additional 3 hours after which a vacuum was applied to remove the condensation water from the reaction mixture. At regular time intervals small samples were pulled from the reactor to determine the Acid Value (AV) of the reaction mixture. The reaction was stopped at AV= 2.3 mg KOH/gram by cooling to room temperature and the resulting polymeric dye (HBPEA -1) was removed from the reactor. The total reaction time was 8 hours. A solution of 50 % (M/M) HBPEA -1 in 2 N HCl solution was prepared by dissolving 300 g of HBPEA 1 in 300 g of 2 N HCl solution at 50°C.

The polymeric dye comprises theoretically 8 hydroxyl end groups, 1 carboxylic acid end group and 1 activated aromatic ring on average.

### Example X. Synthesis of hyperbranched polyesteramide comprising an activated aromatic ring (HBPEA 2)

A 1 liter glass reactor equipped with a mechanical stirrer, a nitrogen inlet and a distillation column, was charged with 410.4 g of di-isopropanol amine and heated to 80°C, after which 205.6 g of flaked succinic anhydride was added. The reaction temperature increased to 120°C due to exothermic reaction. After the exothermic reaction the mixture is heated to 180°C, and 184.1 g of N-phenyl-N-methyl-β-alanine was added at this temperature. The reaction was allowed to proceed for an additional 3 hours after which a vacuum was applied to remove the condensation water from the reaction mixture. Frequently samples were pulled from the reactor to determine the Acid Value (AV) of the reaction mixture. The reaction was stopped at AV= 1.5 mg KOH/gram by cooling the reactor content to room temperature and the resulting polymer (HBPEA 2) was removed from the reactor. The total reaction time was 8 hours. A solution of 50 % (M/M) HBPEA-2 in 2 N HCl solution was prepared by dissolving 300 g of HBPEA 2 in 300 g of 2 N HCl solution at 50°C.

The polymer obtained theoretically comprises 4 hydroxyl end groups, 1 carboxylic acid end group and 1 activated aromatic ring on average.

### Example XI: Preparation of Polymeric Dye No. XI (Color Orange-4)

### 11A. Preparation of diazonium salt

5.1 g of 3-aminobenzenesulphonic acid was added to 60 g of 50 % (M/M) sulfuric acid and the mixture was cooled with an ice/salt bath to 0°C. To this solution a solution of 2.5 g of sodium nitrite in 20 g of water was added. The addition was slow enough in order to prevent the reaction temperature to rise above 2°C.

### 11B. Preparation of polymeric azo dye

100 g of HBPEA-1 solution of Example IX was cooled with an ice bath to 0°C, after which the diazonium salt prepared under 11 A was added in such a manner that the temperature of the reaction didn't rise above 10°C. The reaction mixture colored immediately after the addition of the diazonium salt. The reaction was allowed to stand for an additional 2 hours after which the reaction mixture was neutralized with 50 % (M/M) sodium hydroxide solution. The neutralization was done slowly while the reaction mixture was cooled with the ice/salt bath in order the keep the temperature below 20°C. During neutralization a large amount of precipitate was formed, most likely the precipitate was sodium sulfate, and the precipitate was removed by filtration. The resulting polymeric dye solution was diluted with water to a (concentration about 25% (M/M). The solution was colored orange and had a pH of approximately 9.

The polymeric dye has a calculated functionality 1 carboxylate anion and 8 hydroxy groups of per average chromophore unit.

### Example XII: Preparation of Polymeric Dye No. XII (Color Orange-5)

### 12A. Preparation of diazonium salt

5.5 g of 2-Aminobenzothiazole was added to 120 g of 50 % (M/M) sulfuric acid and the mixture was cooled with an ice/salt bath to 0°C. To this solution a solution of 2.5 g of sodium nitrite in 20 g of water was added. The addition was slow enough in order to prevent the reaction temperature to rise above 2°C.

### 12B. Preparation of polymeric azo dye

100 g of HBPEA-1 solution of Example IX was cooled with an ice bath to 0°C, after which the diazonium salt prepared under 12A was added in such a manner that the temperature of the reaction didn't rise above 10°C. The reaction mixture colored immediately after the addition of the diazonium salt. The reaction was allowed to stand for an additional 2 hours after which the reaction mixture was neutralized with 50 % (M/M) sodium hydroxide solution. The neutralization was done slowly while the reaction mixture was cooled with the ice/salt bath in order the keep the temperature below 20°C. During neutralization a large amount of precipitate was formed, most likely the precipitate was sodium sulfate, and the precipitate was removed by filtration. The resulting polymer dye solution was diluted with water to a concentration about 25% (M/M). The solution was colored orange and had a pH of approximately 9.

The polymeric dye has a calculated functionality of 1 carboxylate anion and 8 hydroxy groups per average chromophore unit.

### Example XIII: Preparation of Polymeric Dye No. XIII (Color Orange-4)

### 13A. Preparation of diazonium salt

9.7 g of 3-aminobenzenesulphonic acid was added to 90 g of 50 % (M/M) sulfuric acid and the mixture was cooled with an ice/salt bath to 0°C. To this solution a solution of 4.8 g of sodium nitrite in 20 g of water was added. The addition was slow enough in order to prevent the reaction temperature to rise above 2°C.

### 13B. Preparation of polymeric azo dye

100 g of HBPEA 2 solution of Example X was cooled with an ice bath to 0°C, after which the diazonium salt prepared under 13A was added in such a manner that the temperature of the reaction didn't rise above 10°C. The reaction mixture colored immediately after the addition of the diazonium salt. The reaction was allowed to stand for an additional 2 hours after which the reaction mixture was neutralized with 50 % (M/M) sodium hydroxide solution. The neutralization was done slowly while the reaction mixture was cooled with the ice/salt bath in order the keep the temperature below 20°C. During neutralization a large amount of precipitate was formed, most likely the precipitate is sodium sulfate, and the precipitate was removed via filtration. The resulting polymer dye solution was dilited with water to a (concentration about 25% (M/M). the solution was colored orange and had a pH of approximately 9.

The polymeric dye has a calculated functionality of 1 carboxylate anion and 4 hydroxy groups per average chromophore unit.

### Comparative example A: Preparation of Polymeric Dye A (color Orange-5)

### 14A. Preparation of diazonium salt

10.4 g of 2-Aminobenzothiazole was added to 120 g of 50 % (M/M) sulfuric acid and the mixture was cooled with an ice/salt bath to 0°C. To this solution a solution of 4.8 g of sodium nitrite in 20 g of water was added. The addition was slow enough in order to prevent the reaction temperature to rise above 2°C.

### 14B. Preparation of polymeric azo dye

100 g of HBPEA-2 solution of Example X was cooled with an ice bath to 0°C, after which the diazonium salt prepared under 14A was added in such a manner that the temperature of the reaction didn't rise above 10°C. The reaction mixture colored immediately after the addition of the diazonium salt. The reaction was allowed to stand for an additional 2 hours after which the reaction mixture was neutralized with 50 % (M/M) sodium hydroxide solution. The neutralization was done slowly while the reaction mixture was cooled with the ice/salt bath in order the keep the temperature below 20°C. During neutralization essentially all colored material precipitated.

The polymeric dye has a calculated functionality of 1 carboxylate anion and 4 hydroxy groups per average chromophore unit.

Based on this result it was concluded that the polymeric dye prepared according to this comparative example is not suitable as a polymeric dye for the purpose according to the present invention.

### Comparative Experiments D-F

For the Comparative Experiments D-F 5 Palmer Colorants were used as available in commercial markers. These Colorants were included in the washability tests described below.

### Test methods

### Skin washability test

The skin washability for the various ink solutions was determined by means of a hand-staining test by a person doing the test using the following procedure. Tests were done using as the ink solutions the non-formulated water-soluble polymeric dye solutions according to the invention as prepared in the above examples, whereas comparative tests were done using formulated polymeric dye solutions as commercially available.

The hand-staining test was performed according to the procedure. The test person first washed his hands with a regular liquid hand soap and dried them thoroughly. With a cotton swab, he marked the center of the hand palm with a 1/4-inch wide strip of ink solution. He repeated this procedure for a total of two additional times. The ink stain was then allowed to air dry for five minutes. The hand palm was then rinsed with water and carefully dried with a paper towel. The washability was rated on a scale of 0-5 as indicated below by inspection of the residual stain if any.

After the first rating was given, the hand palm was thoroughly washed with liquid soap and then thoroughly dried with a paper towel after which the residual stain, if any, is rated for the second time according to the same scale. The results of the skin washability test have been listed in Table 1.

### Rating of washability test.

0 = excellent washability; no residual staining.
1 = very good washability; very slight residual staining.
2 = good washability; slight residual staining.
3 = medium washability; moderate residual staining.
4 = slight washability; strong residual staining.
5 = no washability; very strong residual staining.

### Fabric washability test

For determining the fabric washability test by staining resistance of the various polymeric dye solutions number 419 woven 100% cotton cloth (15 cm x 15 cm) (ex from TestFabrics Incorporated, USA) was used as the test fabric. Stains were made by dripping 6 drops of each polymeric dye solution onto a spread number 419 woven fabric cloth. By rubbing with a spatula the stains were extended to a more or less circular stain with a diameter of approximately 4 cm. The stained cloths were dried for 24 hours.

The thus dried stained cloths were attached to cotton towels with safety pins such that the cloths were evenly spread over the towel and the towels were placed in the washing machine. In addition, a sufficient amount of dummy load consisting of towels, was placed in the washer to provide a full washing load. 100 g of dry washing powder was placed in the designated filling compartment and the machine was set on a short washing cycle at 40°C with a cold water rinse cycle at the end of the washing cycle.

After the washing cycle the towels were placed into a tumble dryer and dried within 40 minutes. Next the test cloths were removed from the towels and the remaining stains were judged for residual staining according the same scale as indicated above.

### Testing of polymeric dyes

The skin washability test and the fabric washability test was performed with the polymeric dye solutions according to Examples I-VIII and XI-XIII, and with commercially available polymeric dyes available under the trade name Palmer Colorants (ex Milliken, USA) (Comparative Experiments B-F). The polymeric dye according to Comparative Experiment A was not suited to perform the tests with. The results of the washability tests have been collected in table 1.

**Table 1.**

| Results of skin washability and fabric washability tests.^{a)} | | | | | | |
|---|---|---|---|---|---|---|
| Polymeric Dye according to Example (E) / Comparative Experiment (CE) | Anionic group(s) on Chromophore | Avg AFG^{b)} | Avg HFG^{c)} | Hand rinse test | Hand wash test | Fabric Washability |
| E-I (SMA-Red) | None | 17 | 0 | 0 | 0 | 0 |
| E-II (SMA-Orange-1) | None | 17 | 0 | 0 | 0 | 0 |
| E-III (SMA-Orange-1) | None | 8 | 0 | 0 | 0 | 0 |
| E-IV (SMA-Orange-1) | None | 5 | 0 | 0 | 0 | 0 |
| E-V (SMA-Yellow) | None | 5 | 0 | 0 | 0 | 0 |
| E-VI (SMA-Orange-2) | None | 5 | 0 | 0 | 0 | 0 |
| E-VII (SMA-Orange-3) | None | 5 | 0 | 0 | 0 | 0 |
| E-VIII (SMA-Brown) | 1 (COOH) | 5 | 0 | 0 | 0 | 0 |
| E-XI (HBPEA-1-Orange-4) | 1 (SO3⁻) | 1 | 8 | 0 | 0 | 0 |
| E-XI (HBPEA-1-Orange-5) | None | 1 | 8 | 0 | 0 | 0 |
| E-XIII (HBPEA-2-Orange-4) | 1 (SO3-) | 1 | 4 | 0 | 0 | 0 |
| CE-A (HBPEA-2-Orange-5) | None | 1 | 4 | n.t. ^{d)} | n.t. ^{d)} | n.t. ^{d)} |
| CE-B: Palmer Scarlet | | | | 2 | 1 | 1 |
| CE-C: Palmer FL Red | | | | 4 | 4 | 2 |
| CE-D: Palmer Orange | | | | 2 | 1 | 1 |
| CE-E: Palmer Magenta | | | | 2 | 1 | 1 |
| CE-F: Palmer Blue | | | | 3 | 2 | 1 |

| | | | | | | |
|---|---|---|---|---|---|---|
| ^{a)} Rating: 0 = excellent washability; no residual staining; 1 = very good washability; very slight residual staining; 2 = good washability; slight residual staining; 3 = medium washability; moderate residual staining; 4 = slight washability; strong residual staining; 5 = no washability; very strong residual staining.; | | | | | | |
| ^{b)} Avg AFG = Number of anionic functional groups per average chromphore unit; | | | | | | |
| ^{c)} Avg HFG = Number of hydroxyl functional groups per average chromphore unit; | | | | | | |
| ^{d)} n.t. = not tested because of insufficient solubility of the polymeic dye. | | | | | | |

## Claims

1. Water-soluble polymeric dye comprising an anionic or nonionic chromophore unit covalently bound to a polymer backbone, **characterized in that** the polymer backbone is based on a water-soluble anionic or nonionic polymer and the polymer backbone comprises
a) at least 2.5 anionic functional groups or at least 5 hydroxyl functional groups, or a combination thereof, per average chromophore unit for an anionic chromophore unit or
b) at least 3.5 anionic functional groups or at least 7 hydroxyl functional groups, or a combination thereof, per average chromophore unit, for an nonionic chromophore unit.

2. Polymeric dye according to claim 1, wherein the polymer backbone comprises at least 3.5 anionic functional groups or at least 7 hydroxyl functional groups, or a combination thereof, per average chromophore unit for an anionic chromophore unit.

3. Polymeric dye according to claim 1 or 2, wherein the polymer backbone comprises at least 4 anionic functional groups or at least 8 hydroxyl functional groups, or a combination thereof, per average chromophore unit

4. Polymeric dye according to any of claims 1-3, wherein the anionic group comprised by the polymeric backbone is a carboxylic acid or sulphonic acid, or a salt thereof.

5. Polymeric dye according to any of claims 1-4, wherein the water-soluble polymer is chosen from the group consisting of carboxy functional polyacrylates, polyvinyl alcohols, SMA and hyperbranched polyesteramides.

6. Polymeric dye according to any of claims 1-5, wherein the polymeric backbone has a weight average molecular weight (Mw) between 1000 and 100.000, preferably between 1000 and 10.000, more preferably between 1000 and 3.000.

7. Polymeric dye according to any of claims 1-6, wherein the chromophore unit comprises at least one anionic group.

8. Polymeric dye according to any of claims 1-7, wherein the chromophore unit is derived from a chromophore chosen from the group consisting of azo chromophores, anthraquinone chromophores, diarylmethane chromophores, triarylmethane chromophores, xanthane chromophores, acridines chromophores, methine chromophores, thiazole chromophores , indamine chromophores, azine chromophores and ozazine chromophores.

9. Process for the preparation of a polymeric dye according to any of claims 1-8, wherein the process comprises
a) modification of an anionic or nonionic water-soluble polymer with one or more chromophore units; or
b) modification of an anionic or nonionic water-soluble polymer with one or more chromophore precursors followed by converting the chromophore precursor or precursors into chromophore units; or
c) modification of a monomer with a chromophore or a chromophore precursor, followed by converting the monomer together with suitable monomers bearing anionic or hydroxyl functional groups, and optionally further comonomers, into a polymer, or
d) modification of a polymer comprising latent hydroxyl and/or anionic functional groups with a chromophore unit (or prechromophore unit) followed by converting the latent hydroxyl and/or anionic functional groups into hydroxyl and/or anionic functional groups.

10. Process according to claim 9, comprising esterification of a hydoxyl functional group with a carboxylic acid functional activated aromatic group followed by diazotation with a diazonium salt of an aromatic amine.

11. Process according to claim 9, comprising reaction of an chromophore bearing an aliphatic hydroxyl group or an amine group with a carboxylic acid or anhydride functional monomeric unit.

12. Process according to claim 9, comprising reaction of an chromophore bearing an amine or carboxylic acid group with a epoxy functional monomeric unit.

13. Use of polymeric dye according to any of claims 1-8 for the preparation of ink and paint compositions.

14. Ink or paint composition comprising a polymeric dye according to any of claims 1-8.

15. Use of the composition according to claim 14 in markers and ink jet cartridges

16. Markers and ink jet cartridges comprising a composition according to claim 14.

17. Use of ink composition according to claim 15 for the temporary coding of fiber yarns and textile

18. Fiber yarns and textile bearing a temporary coding based on a polymeric dye according to any of claims 1-8.
